# EUROPÄISCHE PATENTSCHRIFT

(11) **EP 2 617 598 B1**
(45) Veröffentlichungstag und Bekanntmachung des Hinweises auf die Patenterteilung: **12.07.2017**
(21) Anmeldenummer: 12193396.4
(22) Anmeldetag: 20.11.2012
(51) Int. Cl.: B60K 37/02

(54) **Verfahren zum Befestigen eines transparenten ersten Teils auf einem zweiten Teil**
Method for fastening a transparent first part on a second part
Procédé de fixation d'une première pièce transparente sur une seconde pièce

(30) Priorität: 17.01.2012 DE 102012200631
(43) Veröffentlichungstag der Anmeldung: 24.07.2013
(73) Patentinhaber: Magneti Marelli GmbH, 65428 Rüsselsheim (DE)
(72) Erfinder: Weber, Marcus, 71638 Ludwigsburg (DE); Klimo, Marián, 71069 Sindelfingen (DE)
(74) Vertreter: DREISS Patentanwälte PartG mbB

(56) Entgegenhaltungen:
- DE-A1- 4 343 201
- DE-A1- 19 934 446
- FR-A1- 2 948 464

## Beschreibung

Die vorliegende Erfindung betrifft ein Verfahren zum Verkleben einer transparenten Abdeckscheibe eines Schalteinsatzes für eine Armaturentafel eines Kraftfahrzeugs auf einem Frontrahmen des Schalteinsatzes gemäß dem Oberbegriff des Anspruchs 1. Die Erfindung betrifft außerdem eine transparente Abdeckscheibe eines Schalteinsatzes für eine Armaturentafel eines Kraftfahrzeugs, wobei die Abdeckscheibe zum Verkleben mit einem Frontrahmen des Schalteinsatzes vorgesehen ist, gemäß dem Oberbegriff des Anspruchs 8. Schließlich betrifft die Erfindung auch einen Kunststoff-Frontrahmen eines Schalteinsatzes für eine Armaturentafel eines Kraftfahrzeugs, wobei der Frontrahmen zum Verkleben mit einer transparenten Abdeckscheibe des Schalteinsatzes vorgesehen ist, gemäß dem Oberbegriff des Anspruchs 9.

Aus dem Stand der Technik ist beispielsweise ein Produkt für einen Innenraum eines Kraftfahrzeugs in Form eines Schalteinsatzes für eine Armaturentafel des Kraftfahrzeugs bekannt. Der Schalteinsatz umfasst üblicherweise einen Frontrahmen aus Kunststoff, der mehrere unterschiedlich große Öffnungen und Sichtfenster aufweist, in denen verschiedene Anzeigen (z.B. Geschwindigkeitsanzeige, Drehzahlanzeige, Kraftstofffüllstandsanzeige, Motortemperaturanzeige, Ladedruckanzeige, etc.) sowie verschiedene Kontrollleuchten (z.B. für den Zustand der Beleuchtungseinrichtung, für den Zustand des Motors, für den Zustand des Fahrwerks, für den Zustand der Karosserie, etc.) oder Bildschirme (z.B. für Navigation, als virtuelle Anzeigen, als virtuelle Kontrollleuchten, etc.) angeordnet sein können. Die Öffnungen und/oder Sichtfenster des Frontrahmens sind durch eine oder mehrere transparente Abdeckscheiben aus Glas oder Kunststoff verschlossen, um die Anzeigen, Kontrollleuchten oder Bildschirme vor mechanischen Einflüssen, Schmutz, Staub und Feuchtigkeit zu schützen.

Nach dem Stand der Technik werden die transparenten Abdeckscheiben auf den Frontrahmen geclipst oder geschweißt (z.B. mittels Ultraschall-, Laser- oder Vibrationsschweißen). Das Clipsen hat den Nachteil, dass die Clipsverbindungen beim Herstellen der Verbindung brechen kann, sowie die Verbindungen unter Umständen nicht die geforderte Passgenauigkeit, Festigkeit und Haltbarkeit aufweisen. Beim Betrieb des Kraftfahrzeugs kann es aufgrund von Vibrationen oder aufgrund von mangelnder Steifigkeit der Kraftfahrzeugkarosserie zu Vibrations- und Knarzgeräuschen im Bereich der Clipsverbindungen kommen. Das Verschweißen der Abdeckscheibe mit dem Frontrahmen hat den Nachteil, dass der Bereich, in dem die beiden Teile miteinander verschweißt werden sollen und der außerhalb des Sichtbereichs des Fahrers des Kraftfahrzeugs liegt, häufig nur sehr schwer zugänglich ist, insbesondere mit einem Schweißgerät. Aufgrund der komplexen Geometrien des Frontrahmens kann die Abdeckscheibe deshalb häufig nur punktuell und in manchen Fällen sogar gar nicht mit dem Frontrahmen verschweißt werden.

Ein Verfahren der eingangs genannten Art ist beispielsweise aus der DE 43 43 201 A1 bekannt. Eine transparente Abdeckscheibe der eingangs genannten Art ist beispielsweise aus der DE 199 34 446 A1 bekannt.

Ausgehend von dem beschriebenen Stand der Technik liegt der vorliegenden Erfindung die Aufgabe zugrunde, die Befestigung eines transparenten ersten Teils eines Produkts für einen Innenraum eines Kraftfahrzeugs auf einem zweiten Kunststoffteil des Produkts dahingehend zu verbessern, dass die Befestigung einfach und schnell herzustellen ist und eine sichere, zuverlässige und langfristige, insbesondere den hohen Anforderungen im Kraftfahrzeugbereich genügende Befestigung ermöglicht. Insbesondere soll beim Verkleben der Abdeckscheibe mit dem Frontrahmen des Schalteinsatzes verhindert werden, dass Klebstoff für einen Fahrer des Kraftfahrzeugs sichtbar in einen Sichtbereich des Schalteinsatzes gelangt.

Zur Lösung dieser Aufgabe wird ausgehend von dem Verfahren der eingangs genannten Art ein Verfahren mit den Merkmalen des Anspruchs 1 vorgeschlagen. Das hat den Vorteil, dass eines der Teile oder beide Teile mit Klebstoff versehen werden kann, solange die beiden Teile noch getrennt voneinander sind. Das erleichtert den Zugang zu den Teilen und insbesondere zu den Bereichen der Teile, an denen sie sich nach dem Zusammenfügen berühren und auf die folglich der Klebstoff aufgebracht werden soll. Erst nach dem Aufbringen des Klebstoffs werden die beiden Teile zusammengefügt, so dass der mit dem Klebstoff versehene Bereich des einen Teils auf dem anderen Teil aufliegt oder zumindest in der Nähe des anderen Teils angeordnet ist. Der Klebstoff ist derart gewählt, dass er auch zwei zueinander beabstandete Teile miteinander verbinden kann, so lange der Abstand zwischen den beiden Teilen zumindest bereichsweise derart mit Klebstoff ausgefüllt ist, dass der Klebstoff beide Teile berührt.

Der Klebstoff wird möglichst derart auf den mit Klebstoff zu versehenen Bereich aufgebracht, dass er nach dem Zusammenfügen der beiden Teile einen Bereich, in dem sich die beiden Teile berühren oder einander zugewandt sind, möglichst vollflächig ausfüllt. Dadurch kann ein sicheres und zuverlässiges Befestigen des ersten transparenten Teils auf dem zweiten Teil sichergestellt werden. Andererseits muss die Menge des Klebstoffs so bemessen werden, dass sie beim Zusammenfügen der beiden Teile nicht über den mit Klebstoff zu versehenden Bereich hinausquillt, beispielsweise in Bereiche der Teile, die bei dem fertigen Produkt im Sichtfeld eines Fahrers des Kraftfahrzeugs liegen.

Um die fertige Klebeverbindung zwischen den beiden Teilen zu prüfen, können geeignete Tests an dem fertigen Produkt durchgeführt werden. Diese umfassen beispielsweise eine Sichtprüfung entweder mit dem menschlichen Auge oder automatisiert mit geeigneten Kameras und entsprechender Bildverarbeitungssoftware. Ferner umfassen die Tests beispielsweise eine Vermessung des fertigen Produkts, um festzustellen, ob die beiden Teile in einer vorgegebenen Weise miteinander verklebt sind, das Messen von Auszugskräften, die erforderlich sind, um die beiden Teile im Bereich der Klebestelle wieder voneinander zu trennen, eine Vakuum-Dichtheitsprüfung im Bereich der Klebeverbindung, etc.

Es ist vorteilhaft, wenn vor dem Auftragen des Klebstoffs auf den Klebebereich eines der oder beider miteinander zu verbindenden Teile der Klebebereich erhitzt wird, um die Klebefläche in dem Klebebereich zu aktivieren und die Haltekräfte der fertigen Klebeverbindung zu verbessern. Ein ähnlicher Effekt kann auch durch andere Maßnahmen, beispielsweise durch Aufrauhen der Klebeflächen erreicht werden.

Der Klebstoff kann manuell oder automatisiert, beispielsweise mittels einer maschinen- oder robotergeführten Klebezuführung, in der gewünschten Weise auf den Klebebereich des Teils bzw. der Teile aufgebracht werden. Dabei kann das Aufbringen des Klebstoffs im Rahmen einer Regelung erfolgen, wobei beispielsweise geeignete Kameras mit entsprechender Bildverarbeitungssoftware die auf den Klebebereich aufgebrachte Kleberaupe vermessen, insbesondere hinsichtlich ihres Verlaufs und ihrer Position, Breite und Höhe, und die Klebstoff-Zuführgeschwindigkeit und/oder die Vorschubgeschwindigkeit der Klebstoffzuführungseinheit bzw. deren Position relativ zu dem Klebebereich derart variieren, dass die Klebstoffraupe vorgegebene Eigenschaften, insbesondere bezüglich ihres Verlaufs und ihrer Abmessungen, erfüllt. Auf diese Weise kann stets eine sichere und zuverlässige Klebeverbindung zwischen den beiden zu verklebenden Teilen sichergestellt werden, ohne dass der Klebstoff beim Zusammenfügen der beiden Teile in Bereich quillt, wo er die ordnungsgemäße Funktion und/oder ein ansprechendes Erscheinungsbild des fertigen Produkts beeinträchtigen könnte.

Die beiden miteinander zu verklebenden Teile können aus beliebigen amorphen und semi-kristallinen Kunststoffmaterialien gefertigt sein. Insbesondere bestehen die Teile aus einem der nachfolgenden Materialien: Polymethylmethacrylat, PMMA; Polycarbonat, PC; Acrylnitril-Butadien-Styrol, ABS; Mischung (Compound) aus Acrylnitril-Butadien-Styrol und Polycarbonat, ABS mit PC; Cyclo-Olefin-Copolymere, COC; Polysulfon, PSU. Selbstverständlich ist es denkbar, dass die miteinander zu verklebenden Teile aus unterschiedlichen Materialien bestehen. So kann beispielsweise das transparente Teil auch aus Glas, insbesondere einem Mineralglas bestehen. Die Erfindung betrifft insbesondere das Verkleben einer transparenten Abdeckscheibe aus PMMA mit einem Frontrahmen aus Kunststoff eines Schalteinsatzes für eine Armaturentafel des Kraftfahrzeugs. Die Erfindung kann aber grundsätzlich überall dort eingesetzt werden, wo ein transparentes Teil aus einem beliebigen Material an einem anderen Teil aus einem beliebigen Kunststoff befestigt werden soll, um ein beliebiges Produkt für den Innenraum eines Kraftfahrzeugs herzustellen.

Zur Erzielung einer sicheren und zuverlässigen Klebeverbindung ist der Klebstoff vorzugsweise als ein Klebstoff auf Acrylbasis ausgebildet. Dieser hat insbesondere hinsichtlich der Flexibilität der erzeugten Klebeverbindung besondere Vorteile, die insbesondere im Kraftfahrzeugbereich zur Geltung kommen, da Vibrations- und Knarzgeräusche wirksam verhindert werden. Die Klebebereiche der miteinander verklebten Teile können an dem fertigen Produkt durch zusätzliche Maßnahmen verdeckt sein, um im fertigen Produkt die freie Sicht des Fahrers des Kraftfahrzeugs auf die Klebebereiche zu verhindern. So wäre es beispielsweise denkbar, dass die Klebebereiche durch ein Sichtschutzblendenelement verdeckt werden. Das Sichtschutzblendenelement könnte integraler Bestandteil des Kunststoffteils sein, mit dem das transparente erste Teil verklebt wird. Es wäre aber auch denkbar, dass das Sichtschutzblendenelement einfach eine farbige Beschichtung des transparenten Teils in dem Klebebereich umfasst. Die Beschichtung wird vorzugsweise vor dem Zusammenfügen der beiden Teile aufgebracht. Ebenso wäre es denkbar, dass das transparente Teil in dem Klebebereich eingefärbt ist, so dass die Sicht auf den Klebebereich von außerhalb des Produkts zumindest erschwert wird. Schließlich wäre es auch denkbar, dass das transparente Teil aus mehreren Komponenten gefertigt ist, wobei ein im Sichtbereich des Fahrers des Kraftfahrzeugs liegender Bereich vorzugsweise aus einem glasklaren, transparenten Material besteht und der Klebebereich aus einem anderen Material besteht, das die Sicht auf den Klebebereich zumindest erschwert. Diese beiden Komponenten des transparenten Teils können in einem an sich aus dem Stand der Technik bekannten Mehrkomponenten-Herstellungsverfahren zu dem fertigen transparenten Teil miteinander verbunden werden.

Weitere Merkmale und Vorteile der vorliegenden Erfindung werden nachfolgend anhand der Figuren näher erläutert. Dabei können die nachfolgend erläuterten Merkmale und Vorteile nicht nur in der beschriebenen Kombination miteinander den Gegenstand der vorliegenden Erfindung bilden. Vielmehr kann jedes der beschriebenen Merkmale und Vorteile auch für sich alleine betrachtet einen wesentlichen Aspekt der Erfindung darstellen. Es zeigen:
- Figur 1: zwei Teile, die gemäß dem erfindungsgemäßen Verfahren aneinander befestigt werden sollen;
- Figur 2: die beiden nach dem erfindungsgemäßen Verfahren aneinander befestigten Teile aus Figur 1;
- Figur 3: eine erste mögliche Realisierung des erfindungsgemäßen Verfahrens zum Befestigen zweier Teile aneinander; und
- Figur 4: eine weitere mögliche Realisierung des erfindungsgemäßen Verfahrens.

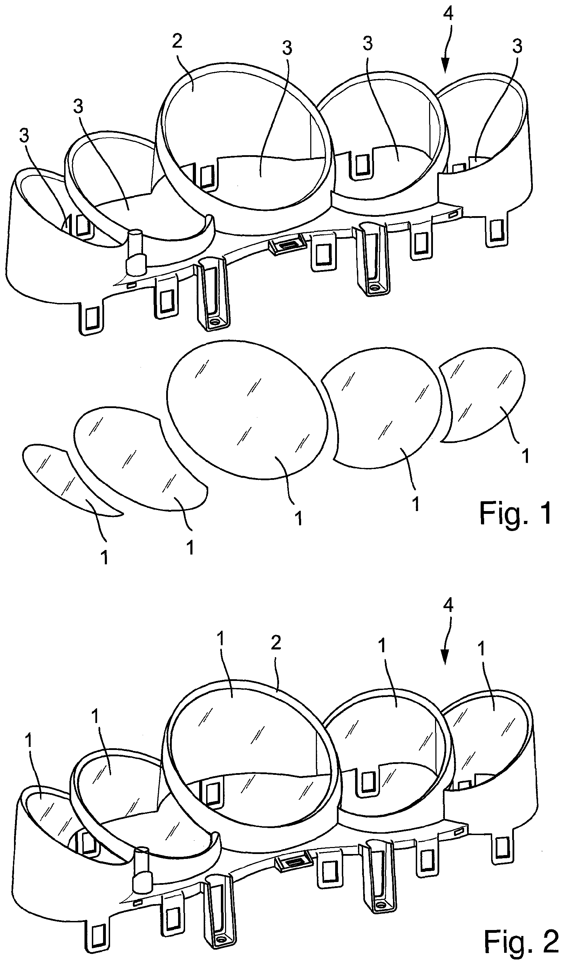

In Figur 1 sind mehrere transparente erste Teile eines Produkts für einen Innenraum eines Kraftfahrzeugs, sowie ein zweites Teil des Produkts aus Kunststoff, auf dem die ersten Teile befestigt werden, dargestellt. Die transparenten ersten Teile sind mit dem Bezugszeichen 1 bezeichnet und in dem in Figur 1 gezeigten Ausführungsbeispiel als transparente Abdeckscheiben ausgebildet. Das zweite Kunststoffteil ist mit dem Bezugszeichen 2 bezeichnet und in dem dargestellten Ausführungsbeispiel als ein Frontrahmen eines Schalteinsatzes für eine Armaturentafel eines Kraftfahrzeugs ausgebildet. Der Frontrahmen 2 weist Öffnungen bzw. Sichtfenster 3 auf, hinter denen bei dem fertigen Schalteinsatz Anzeigeinstrumente, Bildschirme und/oder Kontroll- oder Warnleuchten angeordnet sein können. Diese Öffnungen bzw. Sichtfenster 3 werden durch die an dem Frontrahmen 2 befestigten Abdeckscheiben 1 verschlossen. Figur 2 zeigt den Frontrahmen 2 mit daran befestigten Abdeckscheiben 1. Der gesamte Schalteinsatz ist in den Figuren 1 und 2 mit dem Bezugszeichen 4 bezeichnet.

In dem in den Figuren 1 und 2 gezeigten Ausführungsbeispiel ist also das fertige Produkt als ein Schalteinsatz für eine Armaturentafel eines Kraftfahrzeugs ausgestaltet. Selbstverständlich kann die vorliegende Erfindung auch zum Verbinden beliebig anderer Teile von beliebig anderen Produkten für einen Innenraum eines Kraftfahrzeugs eingesetzt werden und ist nicht auf das hier beschriebene Ausführungsbeispiel der Befestigung einer transparenten Abdeckscheibe auf einem Frontrahmen eines Schalteinsatzes für eine Armaturentafel beschränkt.

Die aneinander zu befestigenden Teile 1, 2 bestehen vorzugsweise aus Kunststoff, insbesondere aus einem amorphen und halb-kristallinen Kunststoffmaterial. Dabei können die aneinander zu befestigenden Teile 1, 2 auch aus unterschiedlichen Materialien bestehen. Besonders bevorzugt ist dabei, dass die Teile 1, 2 aus einem der nachfolgenden Materialien bestehen: Polymethylmethacrylat (PMMA), Polycarbonat (PC), Acrylnitril-Butadien-Styrol (ABS), einem Compound aus Acrylnitril-Butadien-Styrol und Polycarbonat (ABS mit PC), Cyclo-Olephin-Copolymere (COC) und Polysulfon (PSO). Selbstverständlich ist es denkbar, dass das transparente Teil 1 auch aus einem Glasmaterial, insbesondere aus Mineralglas, bestehen kann. Grundsätzlich kann mit der vorliegenden Erfindung ein beliebiges transparentes Teil aus einem beliebigen Kunststoffmaterial (Teil 1) auf einem beliebig anderen Teil aus einem beliebigen Material (Teil 2) durch Verkleben befestigt werden. Die Teile 1 und 2 können auch aus einem beliebigen Materialcompound, d.h. aus einer Zusammensetzung mehrerer unterschiedlicher Materialien, bestehen, bspw. mit Glaskugeln oder Hohlglaskugeln für den Frontrahmen 2. In den hier beschriebenen Ausführungsbeispielen ist der Frontrahmen 2 aus Kunststoff gefertigt. Die Erfindung ist aber nicht auf diese Ausführungsbeispiele beschränkt.

Gemäß der vorliegenden Erfindung wird vorgeschlagen, dass das erste Teil 1 mit dem zweiten Teil 2 verklebt wird. Dabei kann ein beliebiger Klebstoff zum Einsatz kommen. Vorzugsweise wird ein Klebstoff auf Acrylbasis verwendet, da dieser auch im ausgehärteten Zustand eine insbesondere für den Einsatz in einem Kraftfahrzeug besonders vorteilhafte hohe Flexibilität aufweist.

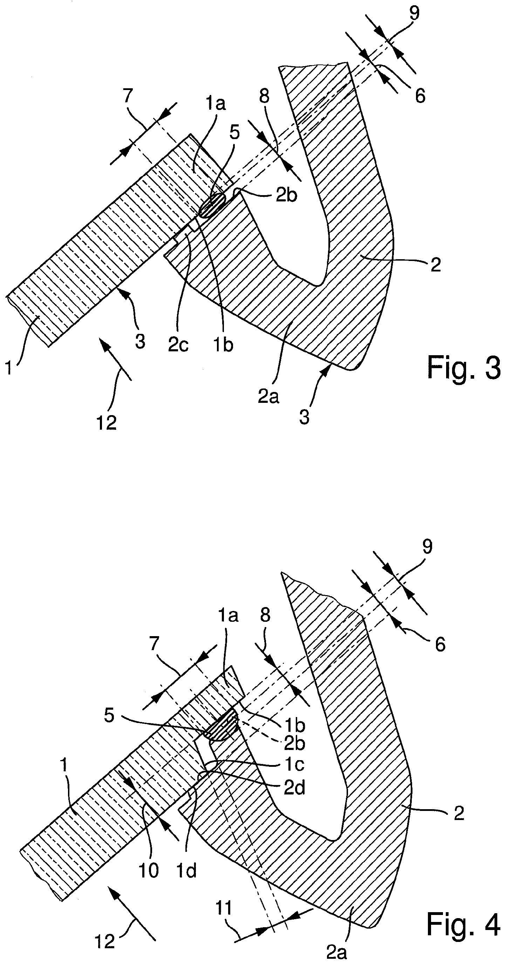

In den Figuren 3 und 4 sind bevorzugte Realisierungsmöglichkeiten des erfindungsgemäßen Verfahrens dargestellt. Die Realisierungen unterscheiden sich insbesondere dadurch, auf welches der beiden Teile 1, 2 der Klebstoff aufgebracht wird, bevor die beiden Teile 1, 2 zusammengefügt werden. Die Figuren 3 und 4 zeigen jeweils einen Schnitt durch eine Abdeckscheibe 1 und den Frontträger 2 des Schalteinsatzes 4 aus den Figuren 1 und 2 im Bereich einer der Öffnungen bzw. Sichtfenster 3. Dabei wird die Abdeckscheibe 1 von hinten auf einen nach hinten weisenden Abschnitt 2b eines vorderen Randbereichs 2a des Frontrahmens 2 aufgesetzt.

Bei dem Ausführungsbeispiel aus Figur 3 wird auf den nach hinten weisenden Abschnitt 2b des vorderen Randbereichs 2a des Frontrahmens 2 Klebstoff 5 aufgebracht. Der nach hinten weisende Abschnitt 2b des Frontrahmens 2 bildet also denjenigen Bereich des zweiten Kunststoffteils 2, der nach dem Zusammenfügen der beiden Teile 1, 2 auf dem transparenten Teil 2 aufliegt oder in der Nähe des transparenten Teils 1 angeordnet ist. In dem dargestellten Ausführungsbeispiel befinden sich die beiden zusammengefügten Teile 1, 2 in einer zueinander beabstandeten Position. Der Abstand zwischen den beiden zusammengefügten Teilen 1, 2 im Klebebereich 2b ist in Figur 3 mit dem Bezugszeichen 6 bezeichnet. In dem dargestellten Ausführungsbeispiel beträgt der Abstand 6 beispielsweise 0,3 mm, wobei eine Toleranz von ± 0,03 mm möglich ist. Die beiden zusammengefügten Teile 1, 2 werden in dem zusammengefügten Zustand durch ein Abstandselement 2c in dem Abstand 6 voneinander gehalten.

Das Abstandselement 2c dient gleichzeitig als ein Trennelement, welches den Bereich 2b zum Aufbringen des Klebstoffs 5 von dem übrigen Bereich des mit Klebstoff zu versehenden Teils 2 abgrenzt. Dabei liegt der übrige Bereich des mit Klebstoff zu versehenden Teils 2 bei dem fertigen Produkt 4 in einem Sichtfeld des Fahrers des Kraftfahrzeugs. Bei dem dargestellten Ausführungsbeispiel würde der übrige Bereich also dem transparenten Bereich der Abdeckscheibe 1 entsprechen, durch die der Fahrer von außen in Blickrichtung 12 auf die dahinter liegenden Anzeigen, Bildschirme und/oder Warn- und Kontrollleuchten blicken kann. Durch die Trennwand 2c wird also verhindert, dass beim Zusammenfügen der beiden Teile 1, 2 Klebstoff 5 aus dem Klebebereich 2b in das Sichtfeld des Fahrers quillt.

Zur Herstellung der Klebeverbindung gemäß der Realisierung aus Figur 3 wird der Frontrahmen 2 zunächst in einer Halterung positioniert. Danach wird der Klebebereich 2b des Frontrahmens 2 mit dem Klebstoff 5 versehen. Dies kann beispielsweise mittels einer robotergeführten Klebstoffzuführungseinheit automatisch gesteuert oder geregelt erfolgen. Dabei wird der Klebstoff 5 vorzugsweise als durchgehende Klebstoffraupe entlang des gesamten Umfangs um die Öffnung bzw. das Sichtfenster 3 herum auf den Klebebereich 2b aufgebracht. Beim Aufbringen des Klebstoffs 5 im Rahmen einer Regelung können beispielsweise geeignete Kameras mit entsprechender Bildverarbeitungssoftware die auf den Klebebereich 2b aufgebrachte Kleberaupe 5 vermessen, insbesondere hinsichtlich ihres Verlaufs und ihrer Position, Breite und Höhe, und die Klebstoff-Zuführgeschwindigkeit und/oder die Vorschubgeschwindigkeit der Klebstoffzuführungseinheit bzw. deren Position relativ zu dem Klebebereich 2b derart variieren, dass die Klebstoffraupe 5 vorgegebene Eigenschaften, insbesondere bezüglich ihres Verlaufs und ihrer Abmessungen, aufweist.

In dem dargestellten Ausführungsbeispiel kann eine optimale Befestigung des transparenten ersten Teils 1 auf dem zweiten Kunststoffteil 2 erreicht werden, wenn die Kleberaupe 5 eine Breite 7 von mindestens 1 mm und eine Höhe 8 aufweist, die größer als der Abstand 6 der beiden Teile 1, 2 im zusammengefügten Zustand ist. Die Höhe 8 der Kleberaupe 5 beträgt beispielsweise 0,5 mm (Toleranz +0,5 mm), so dass sich eine nominale Überdeckung 9 mit Klebstoff von etwa 0,2 mm ergibt. Um die Sicherheit und Zuverlässigkeit der Klebeverbindung zu verbessern, können in dem Ausführungsbeispiel der Figur 3 die Breite 7 der Kleberaupe beispielsweise 1,2 mm und die Höhe 8 beispielsweise 0,7 mm betragen.

Es können verschiedene Arten von Klebstoff 5 verwendet werden. Besonders vorteilhaft ist in dem beschriebenen Ausführungsbeispiel jedoch die Verwendung eines Klebstoffes 5 auf Acrylbasis, da dieser eine besonders flexible Verbindung der beiden Teile 1, 2 miteinander ermöglicht, so dass es während des Betriebs des Kraftfahrzeugs in dem fertigen Schalteinsatz bzw. der Armaturentafel des Kraftfahrzeugs nicht zu Vibrations- und/oder Knarzgeräuschen kommt.

Nach dem Aufbringen des Klebstoffs 5 auf den Klebebereich 2b des Frontrahmens 2 wird das erste transparente Teil 1 automatisch ergriffen, beispielsweise mittels eines robotergeführten mechanischen Greifers oder Vakuumsaugers, und zu einer Erhitzungsstation befördert, um die Klebefläche 1b am äußeren Rand 1a des transparenten Teils 1 zu aktivieren, damit die fertige Klebeverbindung besser und stabiler ausgebildet ist. Die Klebefläche 1b ist der Bereich des Teils 1, der bei zusammengefügten Teilen 1, 2 dem Klebebereich 2b des Kunststoffteils 2 zugewandt ist. Dann wird das erste Teil 1 mit dem Klebebereich 2b des Kunststoffteils 2 zugewandter Klebefläche 1b auf das Kunststoffteil 2 aufgesetzt und positioniert. Zur Positionierung des transparenten Teils 1 auf dem Kunststoffteil 2 können Positionierungsmittel vorhanden sein, die beispielsweise aus Vertiefungen und entsprechenden Vorsprüngen in den Teilen 1, 2 bestehen. Um den Kontakt zwischen dem transparenten ersten Teil 1 und dem Kunststoffteil 2 sicherzustellen, sollte während des Aushärtens des Klebstoffes 5 das transparente Teil 1 mit einer kontinuierlichen Kraft auf das Kunststoffteil 2 gepresst werden. Das Aushärten des Klebstoffes 5 kann beispielsweise mittels Licht eingeleitet und durchgeführt werden. Das Licht wird vorzugsweise von einer oder mehreren LEDs erzeugt. Das Licht kann einen beliebigen Wellenlängenbereich aufweisen, insbesondere wird Licht in einem UV-Wellenlängenbereich verwendet. Das Aushärten des Klebstoffes 5 dauert weniger als eine Minute, insbesondere 20 bis 30 Sekunden. Um die Qualität der Klebeverbindung zwischen den beiden Teilen 1, 2 zu überprüfen, werden nach dem Aushärten des Klebstoffes 5 geeignete Tests ausgeführt.

In Figur 4 ist eine andere Realisierungsmöglichkeit der vorliegenden Erfindung gezeigt. Dabei wird der Klebstoff 5 nicht auf einen Klebebereich 2b des Kunststoffteils 2, sondern auf einen Klebebereich 1b am äußeren Rand 1a des transparenten Teils 1 aufgebracht. Auch in diesem Fall ist der Klebebereich 1b derart gewählt, dass er nach dem Zusammenfügen der beiden Teile 1, 2 auf dem Kunststoffteil 2 aufliegt oder sich in der Nähe des Kunststoffteils 2 befindet. In dem dargestellten Ausführungsbeispiel befindet sich der Klebebereich 1b nach dem Zusammenfügen der beiden Teile 1, 2 in einem Abstand zu der Klebefläche 2b des Kunststoffteils 2. Der Klebebereich 1b ist radial nach innen durch eine Trennwand 1c der Höhe 10 begrenzt. Eine nach außen (entgegen Blickrichtung 12) gerichtete Auflagefläche 1d der Trennwand 1c des transparenten Teils 1 liegt nach dem Zusammenfügen der beiden Teile 1, 2 auf einer entsprechenden Auflagefläche 2d des Kunststoffteils 2 auf. Der Abstand zwischen dem Klebebereich 1b des transparenten Teils 1 und der Klebefläche 2b des Kunststoffteils 2 ergibt sich aus der Höhe 10 der Trennwand 1c abzüglich einer Höhe 6 der Klebefläche 2b bezogen auf die Auflagefläche 2d des Kunststoffteils 2. Auch in radialer Richtung ist ein Abstand 11 zwischen dem ersten transparenten Teil 1 und dem Kunststoffteil 2 vorgesehen. Insbesondere ist der Abstand 11 zwischen der radial nach außen gerichteten Seitenfläche der Trennwand 1c und der radial nach innen gerichteten Wand eines die Klebefläche 2b tragenden, über die Auflagefläche 2d nach innen (in Blickrichtung 12) hinausragenden Vorsprungs ausgebildet. Der Abstand 11 ermöglicht es, Relativbewegungen in radialer Richtung zwischen dem ersten transparenten Teil 1 und dem Kunststoffteil 2 aufzufangen, ohne dass es zu Spannungen im Bereich der Klebeverbindung zwischen den beiden Teilen 1, 2 kommt.

Bei dem Ausführungsbeispiel der Figur 4 wird zunächst die transparente Abdeckscheibe 1 in einer geeigneten Halterung angeordnet. Danach wird der Klebebereich 1b des transparenten Teils 1 erhitzt, um den Klebebereich 1b zu aktivieren und die Haltekräfte der fertigen Klebeverbindung zu verbessern. Anschließend wird der Klebstoff 5 auf den Klebebereich 1b des transparenten Teils 1 aufgebracht. Dies geschieht beispielsweise durch eine automatisch gesteuerte oder geregelte robotergestützte Klebstoffzufuhreinheit. Dabei hat die aufgebrachte Klebstoffraupe 5 eine Breite 7 von mindestens 1 mm, vorzugsweise von mindestens 1,2 mm, und eine Höhe 8 von mindestens 0,5 mm, bevorzugt von 0,7 mm und besonders bevorzugt von 0,75 mm. Bei einer Höhe 8 der Kleberaupe 5 von 0,75 mm ergibt sich somit eine nominale Überdeckung 9 mit Klebstoff im Bereich von etwa 0,35 mm. Die Höhe 6 der Klebefläche 2b bezogen auf die Auflagefläche 2d des Kunststoffteils 2 beträgt vorzugsweise 0,75 mm, wobei Toleranzen im Bereich von ± 0,03 mm zulässig sind. Die Höhe 10 der Trennwand 1c des transparenten Teils 1 beträgt vorzugsweise 1 mm, wobei auch hier Toleranzen von ± 0,03 mm zulässig sind. Der Abstand 11 in radialer Richtung zwischen dem transparenten Teil 1 und dem Kunststoffteil 2 beträgt beispielsweise 0,4 mm. Die Klebekonturhöhe 8 beträgt vorzugsweise 0,6 mm ± 0,15 mm.

Nach dem Aufbringen des Klebstoffs 5 auf den Klebebereich 1b des ersten transparenten Teils 1 wird das transparente Teil 1 automatisch ergriffen, beispielsweise mittels eines mechanischen Greifers oder eines Sauggreifers, und von hinten in die dafür vorgesehene Position im Bereich der Öffnung beziehungsweise des Sichtfensters 3 des Frontrahmens 2 auf die Klebefläche 2b des Kunststoffteils 2 aufgesetzt, bis die Auflagefläche 1d des transparenten Teils 1 auf der Auflagefläche 2d des Kunststoffteils 2 aufliegt. Für das Herstellen der Klebeverbindung und das Aushärten des Klebstoffes 5 gelten vorzugsweise die gleichen Anforderungen wie oben bereits bezüglich des Ausführungsbeispiels aus Figur 3 beschrieben.

Dank der vorliegenden Erfindung ist es erstmals möglich, ein transparentes Teil 1 eines Produkts 4 für den Innenraum eines Kraftfahrzeugs sicher und zuverlässig an einem anderen Kunststoffteil 2 zu befestigen. Trotz der Verwendung von Klebstoff 5 zur Herstellung der Verbindung zwischen den beiden Teilen 1, 2 wird durch die Trennwände 2c, 1c verhindert, dass Klebstoff 5 in einen Bereich des Produkts 4 gelangen kann, der im Sichtfeld des Fahrers des Kraftfahrzeugs liegt.

## Patentansprüche

1. Verfahren zum Verkleben eines transparenten ersten Teils in Form einer Abdeckscheibe (1) eines Schalteinsatzes (4) für eine Armaturentafel eines Kraftfahrzeugs auf einem zweiten Teil in Form eines Frontrahmens (2) des Schalteinsatzes (4), wobei ein Klebstoff (5) auf eines der Teile (1; 2) in einem Bereich (1b; 2b) aufgebracht wird, mit dem das mit Klebstoff versehene Teil (1; 2) nach dem Zusammenfügen der beiden Teile (1, 2) auf dem anderen Teil (2; 1) aufliegt oder in die Nähe des anderen Teils (2; 1) gebracht wird, **dadurch gekennzeichnet, dass** das mit Klebstoff (5) zu versehende Teil (1; 2) ein Trennelement (1c; 2c) aufweist, welches den Bereich (1b; 2b) zum Aufbringen des Klebstoffs (5) von dem übrigen Bereich (3) des mit Klebstoff (5) zu versehenden Teils (1; 2) abgrenzt und verhindert, dass beim Zusammenfügen der beiden Teile (1, 2) Klebstoff (5) aus dem Bereich (1b; 2b) zum Aufbringen des Klebstoffs (5) in ein Sichtfeld eines Fahrers des Kraftfahrzeugs quillt.

2. Verfahren nach Anspruch 1, **dadurch gekennzeichnet, dass** der übrige Bereich des mit Klebstoff (5) zu versehenden Teils (1; 2) bei dem fertigen Schalteinsatz (4) in einem Sichtfeld (3) eines Fahrers des Kraftfahrzeugs auf den Schalteinsatz (4) liegt.

3. Verfahren nach Anspruch 1 oder 2, **dadurch gekennzeichnet, dass** der mit dem Klebstoff (5) zu versehende Bereich (1b; 2b) vor dem Aufbringen des Klebstoffs (5) erhitzt wird.

4. Verfahren nach einem der Ansprüche 1 bis 3, **dadurch gekennzeichnet, dass** die zu verklebenden Teile (1, 2) aus einem amorphen und halb-kristallinen Kunststoffmaterial oder Glas bestehen.

5. Verfahren nach Anspruch 4, **dadurch gekennzeichnet, dass** die zu verklebenden Teile (1, 2) aus einem der nachfolgenden Materialien bestehen:
Polymethylmethacrylat, PMMA; Polycarbonat, PC;
Acrylnitril-Butadien-Styrol, ABS; Mischung aus Acrylnitril-Butadien-Styrol und Polycarbonat, ABS mit PC;
Cyclo-Olefin-Copolymere, COC; Polysulfon, PSU; und
Mineralglas.

6. Verfahren nach einem der Ansprüche 1 bis 5, **dadurch gekennzeichnet, dass** ein Klebstoff (5) auf Acrylbasis verwendet wird.

7. Verfahren nach einem der Ansprüche 1 bis 6, **dadurch gekennzeichnet, dass** zum Aushärten des verwendeten Klebstoffs (5) dieser nach dem Zusammenfügen der beiden zu verklebenden Teile (1, 2) durch das transparente erste Teil (1) hindurch mit Licht in einem UV-Wellenlängenbereich bestrahlt wird.

8. Ein transparentes erstes Teil in Form einer Abdeckscheibe (1) eines Schalteinsatzes (4) für eine Armaturentafel eines Kraftfahrzeugs, wobei das erste Teil (1) zum Verkleben mit einem zweiten Teil in Form eines Frontrahmens (2) des Schalteinsatzes (4) vorgesehen ist, wobei das erste Teil (1) einen Bereich (1b) zum Aufbringen eines Klebstoffs (5) aufweist, wobei der Bereich (1b) derart gewählt ist, dass das mit Klebstoff (5) versehene erste Teil (1) nach dem Zusammenfügen der beiden Teile (1, 2) mit dem Bereich (1b) auf dem anderen Teil (2) aufliegt oder sich in der Nähe des anderen Teils befindet, **dadurch gekennzeichnet, dass** das mit Klebstoff (5) zu versehende erste Teil (1) ein Trennelement (1c) aufweist, welches den Bereich (1b) zum Aufbringen des Klebstoffs (5) von dem übrigen Bereich (3) des ersten Teils (1) abgrenzt und verhindert, dass beim Zusammenfügen der beiden Teile (1, 2) Klebstoff (5) aus dem Bereich (1b; 2b) zum Aufbringen des Klebstoffs (5) in ein Sichtfeld eines Fahrers des Kraftfahrzeugs quillt.

9. Ein Kunststoffteil in Form eines Frontrahmens (2) eines Schalteinsatzes (4) für eine Armaturentafel eines Kraftfahrzeugs, wobei das Kunststoffteil (2) zum Verkleben mit einem anderen Teil in Form einer transparenten Abdeckscheibe (1) des Schalteinsatzes (4) vorgesehen ist, wobei das Teil (2) einen Bereich (2b) zum Aufbringen von Klebstoff (5) aufweist, wobei der Bereich (2b) derart gewählt ist, dass das mit Klebstoff (5) versehene Teil (2) nach dem Zusammenfügen der beiden Teile (1, 2) mit dem Bereich (2b) auf dem anderen Teil (1) aufliegt oder sich in der Nähe des anderen Teils (1) befindet, **dadurch gekennzeichnet, dass** das mit Klebstoff (5) zu versehende Kunststoffteil (2) ein Trennelement (2c) aufweist, welches den Bereich (2b) zum Aufbringen des Klebstoffs (5) von dem übrigen Bereich des Teils (2) abgrenzt und verhindert, dass beim Zusammenfügen der beiden Teile (1, 2) Klebstoff (5) aus dem Bereich (1b; 2b) zum Aufbringen des Klebstoffs (5) in ein Sichtfeld eines Fahrers des Kraftfahrzeugs quillt.

10. Ein erstes Teil (1) nach Anspruch 8 oder ein Teil (2) nach Anspruch 9, **dadurch gekennzeichnet, dass** der übrige Bereich (3) des mit Klebstoff (5) zu versehenden Teils (1; 2) bei dem fertigen Schalteinsatz (4) in einem Sichtfeld eines Fahrers des Kraftfahrzeugs auf den Schalteinsatz (4) liegt.

## Claims

1. Method for bonding a transparent first part in the form of a covering pane (1) of a switch insert (4) for a dashboard of a motor vehicle to a second part in the form of a front frame (2) of the switch insert (4), an adhesive (5) being applied to one of the parts (1; 2) in a region (1b; 2b) by means of which, after the two parts (1, 2) have been joined, the part (1; 2) provided with adhesive is supported on the other part (2; 1) or is brought into the vicinity of the other part (2; 1), **characterised in that** the part (1; 2) to be provided with adhesive (5) comprises a separation element (1c; 2c) which isolates the region (1b; 2b) for applying the adhesive (5) from the remaining region (3) of the part (1; 2) to be provided with adhesive (5) and prevents adhesive (5) from spurting out of the region (1b; 2b) for applying the adhesive (5) into a field of view of a driver of the motor vehicle when the two parts (1, 2) are joined.

2. Method according to claim 1, **characterised in that**, when the switch insert (4) is finished, the remaining region of the part (1; 2) to be provided with adhesive (5) is positioned on the switch insert (4) in a field of view (3) of a driver of the motor vehicle.

3. Method according to either claim 1 or claim 2, **characterised in that** the region (1b; 2b) to be provided with the adhesive (5) is heated before the adhesive (5) is applied.

4. Method according to any of claims 1 to 3, **characterised in that** the parts (1, 2) to be bonded are made of an amorphous and semi-crystalline plastics material or glass.

5. Method according to claim 4, **characterised in that** the parts (1, 2) to be bonded are made of one of the following materials: polymethyl methacrylate, PMMA; polycarbonate, PC; acrylonitrile butadiene styrene (ABS); a mixture of acrylonitrile butadiene styrene and polycarbonate, ABS and PC; cyclic olefin copolymers, COC; polysulfone, PSU; and mineral glass.

6. Method according to any of claims 1 to 5, **characterised in that** an acrylic-based adhesive (5) is used.

7. Method according to any of claims 1 to 6, **characterised in that**, in order to cure the adhesive (5) used, said adhesive is exposed, through the transparent first part (1), to light in a UV wavelength range after the two parts (1, 2) to be bonded have been joined.

8. Transparent first part in the form of a covering pane (1) of a switch insert (4) for a dashboard of a motor vehicle, the first part (1) being provided to be bonded with a second part in the form of a front frame (2) of the switch insert (4), the first part (1) comprising a region (1b) for applying an adhesive (5), the region (1b) being selected such that, after the two parts (1, 2) have been joined, the first part (1) provided with adhesive (5) is supported on the other part (2) or is positioned in the vicinity of the other part by means of the region (1b), **characterised in that** the first part (1) to be provided with adhesive (5) comprises a separation element (1c) which isolates the region (1b) for applying the adhesive (5) from the remaining region (3) of the first part (1) and prevents adhesive (5) from spurting out of the region (1b; 2b) for applying the adhesive (5) into a field of view of a driver of the motor vehicle when the two parts (1, 2) are joined.

9. Plastics part in the form of a front frame (2) of a switch insert (4) for a dashboard of a motor vehicle, the plastics part (2) being provided to be bonded with another part in the form of a transparent covering pane (1) of the switch insert (4), the part (2) comprising a region (2b) for applying adhesive (5), the region (2b) being selected such that, after the two parts (1, 2) have been joined, the part (2) provided with adhesive (5) is supported on the other part (1) or is positioned in the vicinity of the other part (1) by means of the region (2b), **characterised in that** the plastics part (2) to be provided with adhesive (5) comprises a separation element (2c) which isolates the region (2b) for applying the adhesive (5) from the remaining region (2) of the part (2) and prevents adhesive (5) from spurting out of the region (1b; 2b) for applying the adhesive (5) into a field of view of a driver of the motor vehicle when the two parts (1, 2) are joined.

10. First part (1) according to claim 8 or part (2) according to claim 9, **characterised in that**, when the switch insert is finished (4), the remaining region (3) of the part (1; 2) to be provided with adhesive (5) is positioned on the switch insert (4) in a field of view of a driver of the motor vehicle.

## Revendications

1. Procédé de collage d'une première pièce transparente ayant la forme d'une plaque de recouvrement (1) d'un insert de commutation (4) pour le tableau de bord d'un véhicule automobile sur une seconde pièce ayant la forme d'un châssis avant (2) de l'insert de commutation (4), un adhésif (5) étant appliqué sur l'une des pièces (1 ; 2) dans une zone (1b ; 2b) avec laquelle la pièce (1 ; 2) revêtue de l'adhésif repose sur l'autre pièce (2 ; 1) après l'assemblage des deux pièces (1, 2) ou est amenée à proximité de l'autre pièce (2 ; 1), **caractérisé en ce que** la pièce (1 ; 2) devant recevoir l'adhésif (5) présente un élément de séparation (1c ; 2c) qui sépare la zone (1b ; 2b) pour l'application de l'adhésif (5) de la zone restante (3) de la pièce (1 ; 2) devant recevoir l'adhésif (5) et empêche, lors de l'assemblage des deux pièces (1, 2), que l'adhésif (5) ne déborde de la zone (1b ; 2b) prévue pour l'application de l'adhésif (5) jusque dans un champ de vision d'un conducteur du véhicule automobile.

2. Procédé selon la revendication 1, **caractérisé en ce que** la zone restante de la pièce (1 ; 2) devant recevoir l'adhésif (5) se situe, à l'état fini de l'insert de commutation, dans un champ de vision (3) d'un conducteur du véhicule automobile sur l'insert de commutation (4).

3. Procédé selon la revendication 1 ou 2, **caractérisé en ce que** la zone (1b ; 2b) devant recevoir l'adhésif (5) est chauffée avant l'application de l'adhésif (5).

4. Procédé selon l'une des revendications 1 à 3, **caractérisé en ce que** les pièces (1, 2) à coller consistent en une matière plastique amorphe et semi-cristalline ou du verre.

5. Procédé selon la revendication 4, **caractérisé en ce que** les pièces (1, 2) à coller consistent en l'un des matériaux suivants :
polyméthacrylate de méthyle, PMMA ; polycarbonate, PC ;
acrylonitrile butadiène styrène, ABS ; mélange d'acrylonitrile butadiène styrène et de polycarbonate, ABS avec PC ; copolymère cyclo-oléfine, COC ;
polysulfone, PSU ; verre minéral.

6. Procédé selon l'une des revendications 1 à 5, **caractérisé en ce qu'**est utilisé un adhésif (5) à base acrylique.

7. Procédé selon l'une des revendications 1 à 6, **caractérisé en ce que**, pour le durcissement de l'adhésif (5) utilisé, celui-ci est exposé au rayonnement d'une lumière dans une plage de longueurs d'ondes UV au travers de la première pièce transparente (1) après l'assemblage des deux pièces (1, 2) à coller.

8. Première pièce transparente ayant la forme d'une plaque de recouvrement (1) d'un insert de commutation (4) pour le tableau de bord d'un véhicule automobile, la première pièce (1) étant prévue pour être collée sur une seconde pièce ayant la forme d'un châssis avant (2) de l'insert de commutation (4), la première pièce (1) présentant une zone (1b) pour l'application d'un adhésif (5), la zone (1b) étant choisie de façon telle que la première pièce (1) revêtue de l'adhésif (5) repose sur l'autre pièce (2) avec la zone (1b) après l'assemblage des deux pièces (1, 2) ou bien se trouve à proximité de l'autre pièce, **caractérisé en ce que** la première pièce (1) devant recevoir l'adhésif (5) présente un élément de séparation (1c) qui sépare la zone (1b) pour l'application de l'adhésif (5) de la zone restante (3) de la première pièce (1) et empêche, lors de l'assemblage des deux pièces (1, 2), que l'adhésif (5) ne déborde de la zone (1b ; 2b) prévue pour l'application de l'adhésif (5) jusque dans un champ de vision d'un conducteur du véhicule automobile.

9. Pièce en matière plastique ayant la forme d'un châssis avant (2) d'un insert de commutation (4) pour le tableau de bord d'un véhicule automobile, la pièce en matière plastique (2) étant prévue pour être collée sur une autre pièce ayant la forme d'une plaque de recouvrement (1) transparente de l'insert de commutation (4), la pièce (2) présentant une zone (2b) pour l'application d'un adhésif (5), la zone (2b) étant choisie de façon telle que la pièce (2) revêtue de l'adhésif (5) repose sur l'autre pièce (1) avec la zone (2b) après l'assemblage des deux pièces (1, 2) ou bien se trouve à proximité de l'autre pièce (1), **caractérisé en ce que** la pièce en matière plastique (2) devant recevoir l'adhésif (5) présente un élément de séparation (2c) qui sépare la zone (2b) pour l'application de l'adhésif (5) de la zone restante de la pièce (2) et empêche, lors de l'assemblage des deux pièces (1, 2), que l'adhésif (5) ne déborde de la zone (1b ; 2b) prévue pour l'application de l'adhésif (5) jusque dans un champ de vision d'un conducteur du véhicule automobile.

10. Première pièce (1) selon la revendication 8 ou pièce (2) selon la revendication 9, **caractérisée en ce que** la zone restante (3) de la pièce (1 ; 2) devant recevoir l'adhésif (5) se situe, à l'état fini de l'insert de commutation, dans un champ de vision d'un conducteur du véhicule automobile sur l'insert de commutation (4).
